# EUROPEAN PATENT SPECIFICATION

(11) **EP 1 472 306 B1**
(45) Date of publication and mention of the grant of the patent: **13.03.2013**
(21) Application number: 03702551.7
(22) Date of filing: 29.01.2003
(51) Int. Cl.: C08G 77/54, D06M 15/643

(54) **POLYSILOXANES CONTAINING QUATERNARY GROUPS HAVING NITROGEN ATOMS**
POLYSILOXANE ENTHALTEND QUATERNÄRE GRUPPEN MIT STICKSTOFFATOMEN
POLYSILOXANES CONTENANT DES GROUPES QUATERNAIRES A ATOMES D'AZOTE

(30) Priority: 05.02.2002 DE 10204517
(43) Date of publication of application: 03.11.2004
(73) Proprietor: Huntsman Textile Effects (Germany) GmbH, 86462 Langweid a. Lech (DE)
(72) Inventor: CHROBACZEK, Harald, 86153 Augsburg (DE); LINDMAIR, Gabriele, 86405 Meitingen (DE); TSCHIDA, Günther, 86830 Schwabmünchen (DE)
(86) International application number: PCT/EP2003/000866
(87) International publication number: WO 2003/066708

(56) References cited:
- WO-A-99/32539
- DE-A- 19 652 524
- US-A- 4 921 895
- US-B1- 6 242 554

## Description

The invention relates to polyorganosiloxanes which contain at least one unit having at least one quaternary nitrogen atom and at least one other nitrogen-containing radical. It further relates to the treatment of fiber materials with aqueous solutions or dispersions which comprise such polyorganosiloxanes.

It is known to treat fiber materials, in particular fabrics, with polyorganosiloxanes. Advantageous properties, such as, for example, a pleasantly soft feel, can thereby be imparted to the fiber materials. Polyorganosiloxanes which contain quaternary nitrogen atoms and their use for the treatment of fiber materials are likewise known, for example from DE-A 196 52 524. In the products described therein, quaternary nitrogen atoms are located exclusively in side chains of the polysiloxane chain.

WO 99/32539 describes polysiloxanes in which one or more units are present which contain quaternary nitrogen atoms. These units are present either at the end of a polysiloxane chain or in side chains of the polysiloxane chain.
Products which contain units having quaternary nitrogen atoms within the polysiloxane chain, i.e. products in which there are groups with Si atoms at both ends of the N^{®}-containing units, are not mentioned in this WO specification. At the end of the units containing quaternary nitrogen atoms there are no quaternary nitrogen atoms to which 3 alkyl radicals are bonded. In addition, the anions assigned to the quaternary nitrogen atoms are not anions which contain aromatic radicals.
It has been found that although it is possible to obtain aqueous dispersions of the polysiloxanes described in WO 99/32539, these dispersions do not have optimum properties for the treatment of fabrics, which relates to stability of the dispersions and/or softness of the finished fabrics.

US 4 833 225 and US 4 533 714 describe polysiloxanes which contain, within the polysiloxane chain, units containing quaternary nitrogen atoms and the suitability of these polysiloxanes for cosmetic purposes. The use for treatment of fiber materials, such as, for example, textiles, is not mentioned. The products according to these two US specifications do not contain side chains containing nitrogen atoms.

WO 01/41720, WO 01/41721, EP-A 17 121 and EP-A 282 720 describe polysiloxanes for cosmetic purposes. The polysiloxanes contain quaternary nitrogen atoms, but no side chains which contain nitrogen atoms bonded to silicon atoms. The anions assigned to the quaternary nitrogen atoms are not anions which contain aromatic radicals.
EP-A 294 642 likewise describes polysiloxanes containing quaternary nitrogen atoms at the ends of the polysiloxane chain for cosmetic purposes. The polysiloxanes cited therein do not contain side chains containing nitrogen atoms.

It has been found that the products described in said specifications have disadvantages as well as advantages when used for the treatment of textiles, e.g. with regard to nonoptimally soft properties of textiles finished therewith, primarily with regard to nonoptimal inner softness.

The object on which the present invention was based consisted in providing polyorganosiloxanes which do not have the disadvantage given above and which, in the form of aqueous dispersions or solutions, are excellently suitable for the treatment of fiber materials and which impart outstanding inner softness to these fiber materials, in particular textiles.

The object has been achieved by a polyorganosiloxane which has, within the polysiloxane chain, one or more of each of the following structural units

-Si(R¹)₂-O-,

and

-Si(R¹)(Z)-O-,

where the structural units may be distributed arbitrarily over the polysiloxane chain, where the polyorganosiloxane is an open-chain polyorganosiloxane, which additionally contains, within the polysiloxane chain, units of the formula (A) 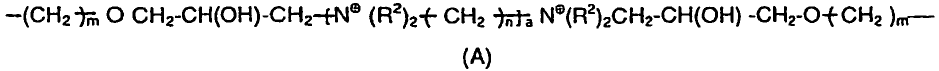 and which contains units of the formula

(R¹)(Y)₂Si-O-

as end-groups,
in which one of the radicals Z present is a radical of the formula (I) and all of the other radicals Z, independently of one another, are R¹ or a radical of the formula (I) 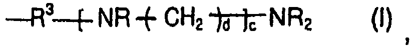 where, in one or more of the radicals of the formula (I), one or more of the nitrogen atoms present may be in quaternized form,
where all of the radicals R¹, independently of one another, are -CH₃ or -CH₂CH₃,
where all of the radicals R, independently of one another, are hydrogen or a linear or branched alkyl radical having 1 to 16 carbon atoms,
all of the radicals R², independently of one another, are an alkyl radical having 1 to 18 carbon atoms,
all of the radicals R³, independently of one another, are a linear or branched alkylene radical having 2 to 6 carbon atoms,
a is 1 or 2,
m is a number from 1 to 8, preferably 3,
n is a number from 2 to 8, preferably 6,
c is 0, 1 or 2,
d is a number from 2 to 6,
where all of the radicals Y present, independently of one another, are an alkyl radical having 1 to 12 carbon atoms or are a radical of the formula (I) or a radical of the formula (I) in which one or more of the nitrogen atoms are in quaternized form, or where all of the radicals Y, independently of one another, are OH or OR², or where all of the radicals Y, independently of one another, are a radical of the formula (II) 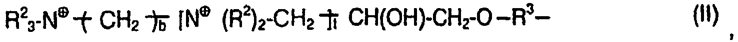 where t is 0 or 1 and b has the value 1 when t = 0, and b is a number from 2 to 6 when t = 1,
and where the polyorganosiloxane contains anions appertaining to the quaternary nitrogen atoms and these appertaining anions are chosen from benzenesulfonate anions and toluenesulfonate anions.

Polyorganosiloxanes according to the invention are preferably in the form of aqueous dispersions, but may also be in the form of an aqueous solution. The dispersions or solutions preferably comprise 5 to 60°= by weight of polyorganosiloxane according to the invention. Depending on the chemical nature of the polysiloxane, it is possible for it to be soluble or self-dispersible in water. In other cases, very stable aqueous dispersions can be obtained by adding one or more dispersants. Suitable dispersants are surface-active compounds which are known to the person skilled in the art in the field of silicone emulsions. In particular, mention may be made here of nonionogenic products, such as fatty alcohol ethoxylates, fatty acid ethoxylates or ethoxylated fatty amines, or cation-active dispersants, such as, for example, quaternized ammonium salts. The amount of dispersant is, for example, in the range from 2 to 10% by weight, based on the overall dispersion. The dispersions can be prepared by generally known processes for the dispersion of polysiloxanes, where necessary with establishment of a desired pH. Depending on the type and amount of polysiloxane used and the dispersants used, particularly stable microemulsions may also result following dispersion.

Polyorganosiloxanes according to the invention in the form of aqueous dispersions or solutions are suitable in an excellent manner for the treatment of fiber materials, in particular fabrics in the form of wovens or knits, in the course of textile finishing. The solutions or dispersions can, for this purpose, also comprise further products known from textile finishing, such as, for example, polymers containing perfluoroalkyl groups for achieving oil-repelling properties, fatty acid alkanolamides, waxes in dispersed form or further polyorganosiloxanes. The application of the aqueous solutions or dispersions to the fiber materials and the subsequent further processing can be carried out by generally known methods. Preferably, application is by means of a padding process. The fiber materials are preferably fabrics in the form of wovens or knits. They can consist of cellulose, in particular cotton, of synthetic polymers or mixtures of these fibers. The treatment with polyorganosiloxanes according to the invention imparts an excellent inner softness to fabrics.

Polysiloxanes according to the invention may either be in the form of open-chain polymers or cyclic polymers. In the case of open-chain polymers, the two end-groups of the polysiloxane chain are formed by units of the formula R¹(Y)₂Si-O-. Cyclic polymers are described in more detail below.

Open-chain polyorganosiloxanes according to the invention contain, in the polysiloxane chain, one or more units of the formula

-Si(R¹)₂-O-.

Preferably, the average number of these units is 5 to 1000, in particular 10 to 700. The expression "average" arises since there is generally a mixture of molecules of different chain lengths in polymers, as a consequence of the preparation process.

In addition, open-chain polyorganosiloxanes according to the invention must contain one or more units of the formula

-Si(R¹)(Z)-O-.

Preferably, the polysiloxanes contain two or more such units, although their average number is preferably less than the number of -Si(R¹)₂-O- units and preferably is at least 2 if the number of -Si(R¹)₂-O- units is greater than 10,
and is at most 35% of the number of -Si(R¹)₂-O- units if the number of -Si(R¹)₂-O- units is greater than 30.

The radicals Z bonded to one Si atom each are side chains of the polyorganosiloxane chain. At least one of the radicals Z must be a radical of the formula (I), 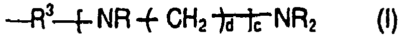 or a radical of the formula (I) in which a further radical R is bonded to one or more of the nitrogen atoms present, where in this case none of the radicals R is hydrogen, meaning that this radical Z contains one or more quaternary nitrogen atoms. Preferably, one or more quaternary nitrogen atoms are present in at least one of all of the radicals Z present. However, quaternary nitrogen atoms may also be present in two or more or all of the radicals Z. It is also possible that none of the radicals Z present contains a quaternary nitrogen atom, although this is less preferred.

At least one of all of the radicals Z present must be a radical of the formula (I) or a radical of the formula (I) in which one or more of the nitrogen atoms are in quaternary form. The other radicals Z present can likewise be a radical of the formula (I), optionally in quaternized form, in accordance with the above statements. Some or all of these other radicals Z can, however, also be a radical R¹, preferably a methyl group.

The type of appertaining anions in the case of radicals Z containing quaternary nitrogen atoms is described below.

In the abovementioned formula (I), all of the radicals R³ are, independently of one another, a linear or branched alkylene radical having 2 to 6 carbon atoms, preferably 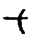 CH₂ 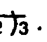 The radicals R bonded to nitrogen atoms as in formula (I) are, independently of one another, each hydrogen or a linear or branched alkyl radical having 1 to 16 carbon atoms. For the case where one or more nitrogen atoms are present in a radical of the formula (I) in quaternary form, the corresponding radicals Z represent radicals of the formulae 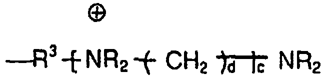 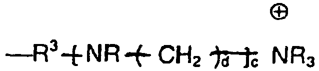 or

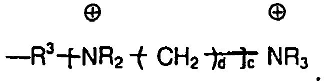

In these cases, all of the radicals R bonded to a quaternary nitrogen atom are each a linear or branched alkyl group having 1 to 16 carbon atoms.
Preferably, all of the radicals R in formula (I) which are not hydrogen are linear alkyl radicals, in particular methyl radicals.
In formula (I), d is a number from 2 to 6, preferably 2 or 3, c is either 0, 1 or 2.

In a preferred embodiment, polyorganosiloxanes according to the invention contain at least one radical Z of the formula 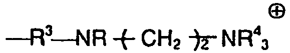 or of the formula 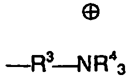 or of the formula 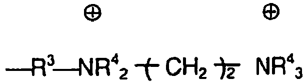 in which all of the radicals R⁴, independently of one another, are an alkyl radical having 1 to 8 carbon atoms, preferably CH₃.

Cyclic polyorganosiloxanes according to the invention must contain, within the polysiloxane chain, at least one unit of the formula (A) 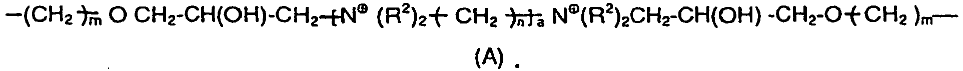 a here is 1 or 2 and m is a number from 1 to 8, preferably 3, and n is a number from 2 to 8, preferably 6.
In formula (A), all of the radicals R² are, independently of one another, an alkyl radical having 1 to 18 carbon atoms.

Two or more units of the formula (A) may also be present within the chain. However, in this case they are not bonded directly to one another, but between each 2 units of the formula (A) there is at least one, preferably two or more, units of the formula

-Si(R¹)₂-O-

and/or of the formula

-Si(R¹)(Z)-O-.

While cyclic polyorganosiloxanes according to the invention must always contain at least one unit of the formula (A), open-chain polysiloxanes may also contain one or more units of the formula (A), although this is not absolutely necessary.

If open-chain polysiloxanes according to the invention contain, within the polysiloxane chain, one or more units of the unit(s) of the formula (A), silicon-containing radicals which contain either one or more units of the formulae

-Si(R¹)₂-O-

and/or

-Si(R¹)(Z)-O-

are present on both ends of the formula (A),
where the oxygen atom of each of these units is bonded to the unit of the formula (A), where the ends of these Si-containing radicals not bonded to formula (A), in the case of open-chain polyorganosiloxanes, simultaneously represent the end-groups of the polyorganosiloxane chain, i.e. have the structure given in more detail below

(R¹)(Y)₂Si-O-

or where these silicon-containing radicals have the structure -O-Si(R¹)Y₂, i.e. are themselves the end-groups of the chain.

In formula (A), all of the radicals R² are, independently of one another, an alkyl radical having 1 to 18 carbon atoms. Preferably, at least 50% of the radicals R² are methyl groups. It is particularly preferred if all of the radicals R² are methyl groups.
In formula (A), m is a number from 1 to 8, preferably 3, and n is a number from 2 to 8, preferably 6.
The anions assigned to the quaternary nitrogen atoms of the formula (A) are chosen from benzenesulfonate anions and toluenesulfonate anions. The toluenesulfonate anion may here be the o-, m- or p-isomer or a mixture of these isomers. In place of a single anion, polyorganosiloxanes according to the invention can also contain two or more of the abovementioned anions. The anions present as counterions to radicals Z which contain quaternary nitrogen atoms are likewise chosen from the group of the abovementioned anions, as are the counterions to the radicals Y which have the structure of the formula (II).

The units present in polyorganosiloxanes according to the invention

-Si(R¹)₂-O-

and

-Si(R¹)(Z)-O-

and the units of the formula (A), where present, may be distributed over the polysiloxane chain arbitrarily, but, as mentioned above, 2 units of (A) are not directly joined to one another.

In addition to the units given above and in claim 1, Si(R¹)₂-O-, Si(R¹)(Z)-O- and optionally (A) in cyclic polymers, which must always be present within the polyorganosiloxane chain, it is possible for polyorganosiloxanes according to the invention to contain further units within the polysiloxane chain, e.g. units of the formula

-Si(R')(X)-O-.

X here is a radical of the formula

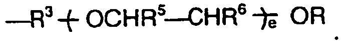

Here R and R³ have the meanings given above. Of the radicals R⁵ and R⁶, in any individual unit, one is H and the other is H or CH₃.
The value of e is in the range from, on average, 2 to 25, where in the normal case a mixture of molecules with varying values of e is present, as a result of the fact that radicals X are obtained by ethoxylation and/or propoxylation of radicals of the formula -R³-OH. Following ethoxylation/propoxylation, the end-groups of X are hydroxyl groups (R=H). Etherification with alcohols can give end-groups -OR in which R is an alkyl group, preferably -CH₃.

Both open-chain and also cyclic polyorganosiloxanes according to the invention can additionally contain one or more units of the formula (III) within the polysiloxane chain

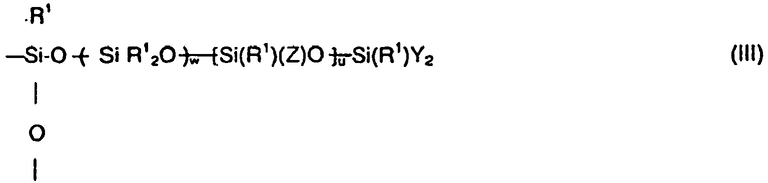

Such polysiloxanes are even more suitable than polysiloxanes which do not contain units of the formula (III) for certain applications.
In this case, side chains which contain Si atoms are present in polysiloxanes according to the invention.

R¹, Y and Z here have the meanings explained in claim 1, although it is not necessary for at least one of the radicals Z present in the units of the formula (III) to be a radical of the formula (I). Preferably, the end-groups of these side chains are Si(CH₃)₃ groups, i.e. in these side chains all of the radicals Y are preferably CH₃.

In formula (III), w is a number from 10 to 500, preferably from 10 to 150, and u has a value in the range from 0.01 w to 0.1 w.

In polyorganosiloxanes according to the invention, where the polysiloxanes are open-chain, the two end-groups of the chain are formed by radicals of the formula

(R¹)(Y)₂Si-O-.

Here, all of the radicals Y are, independently of one another, an alkyl radical having 1 to 12 carbon atoms, a -OH, -OR², a radical of the abovementioned formula (I), where optionally one or more nitrogen atoms of the formula (I) may be in quaternary form, or a radical of the formula (II) 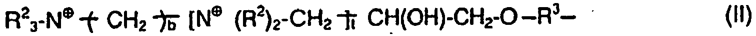 where t has the value 0 or 1 and b has the value 1 when t = 0, and b is a number from 2 to 6 when t =1.
In the given formulae which may represent Y, R, R², R³, b, c and d have the meanings given above.
Preferably, the two end-groups of the polyorganosiloxane chain are radicals of the formula

R¹-Si(CH₃)(Y)-O-.

Particularly preferred end-groups are radicals of the formula

(CH₃)₂Si(Y)-O-.

Polymers according to the invention can have an open-chain structure, as given above. They then have units of said formula (R¹)(Y)₂Si-O- on both chain ends. They can, however, also be in cyclic form. These cyclic polymers must each have one or more of the units Si(R¹)₂-O-

Si(R')(Z)-O-

and of the formula (A).
These units can be distributed over the ring system arbitrarily, but no 2 units A are joined directly to one another, but between each 2 units of the formula (A) there is always a bridge which consists of one or more of the other units given above.

Among the cyclic polyorganosiloxanes according to the invention, preference is given to those which correspond to the following structure 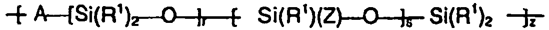 in which
r is a number from 10 to 150
s is a number from 1 to 10
z is a number from 2 to 10
where thus the units A and -Si(R¹)₂- at the two ends of said structural formula are directly bonded to one another.

If polyorganosiloxanes according to the invention are open-chain polymers which do not contain a unit of the formula (A) within the polysiloxane chain, then at least one of the radicals Y present must be a radical of the formula (II).

Preferably, in this case, at least 2 of the radicals Y which are bonded to different silicon atoms are each a radical of the formula (II).

In formula (A), m in the two terminal units 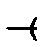 CH₂ 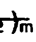 each bonded to an oxygen atom is preferably the number 3. In the units 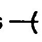 CH₂ 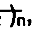 each bonded to two nitrogen atoms, in formula (A), n is preferably 6.

Preferably, 70 to 100% of all of the radicals R¹ are CH₃. In formula (I), formula (II) and formula (A), preferably 70 to 100% of all of the radicals R or R² bonded to nitrogen are hydrogen atoms or methyl groups.

Polyorganosiloxanes according to the invention can be prepared by the following process: The starting material used is a polyorganosiloxane which contains Si(R¹)₂-O- units and optionally units of the formula (A) within the polysiloxane chain, but no units of the formula -Si(R¹)(Z)-O-. Such polysiloxanes are available commercially (e.g. products K5259 and K5355, Goldschmidt, Germany) and can be prepared in accordance with the details of US 4 533 714 and US 4 833 225. The units of the formula -Si(R¹)(Z)-O- can be inserted into these polyorganosiloxanes in accordance with known equilibration processes, e.g. by reaction with silanes of the formula

R¹Si(OR₂)(Z)

in the presence of basic catalysts. For this equilibration reaction, preference is given to using those silanes of said formula in which Z is a radical of the formula (I) which does not contain quaternary nitrogen atoms. If, as is preferred, the intention is then to modify one or more of the radicals of the formula (I) such that at least one quaternary nitrogen atom is present in Z, then this quaternization can be carried out by means of known methods, e.g. by reaction with an alkylating agent of the formula R-Q,
where R is a linear or branched alkyl radical having 1 to 16 carbon atoms and Q^{e} is one of the abovementioned anions, i.e. a benzenesulfonate or toluenesulfonate anion.

If, as starting material for the preparation of polysiloxanes according to the invention, use is made of products which already contain one or more quaternized nitrogen atoms and anions other than benzenesulfonate or toluenesulfonate anions, then these anions must be replaced by benzenesulfonate or toluenesulfonate anions during the preparation of polysiloxanes according to the invention. In the case of acetate anions, this can be carried out, for example, by distilling off acetic acid in the acidic pH range in the presence of water before or after benzene- or toluenesulfonates have been added.
Analogously to the reactions mentioned, the insertion of further units into the polysiloxane chain is possible also by means of a corresponding equilibration reaction using corresponding monomeric silanes which contain these units.
Polyorganosiloxanes according to the invention which additionally contain further units in the chain can also be obtained by using, as starting materials, polysiloxanes of the type mentioned above which already contain such units and which are subjected to an equilibration for the purpose of inserting a radical Z.

The preparation of open-chain polysiloxanes according to the invention which contain radicals Y which have the structure of formula (II) on one or both chain ends can likewise be carried out by an equilibration reaction of the type described above. For this, as well as silanes of the formula

R¹Si(OR)₂Z,

the starting materials used are open-chain polysiloxanes which already have radicals of the formula (II) on one or both chain ends. Such polysiloxanes are available commercially (e.g. TEGOPREN 6924 from Goldschmidt, Germany) or can be prepared in accordance with the teachings of EP-A 17121 or EP-A 294 642. Expediently, alkyl esters of benzenesulfonic acid or toluenesulfonic acid are used for the quaternization of the nitrogen atoms at the chain ends so that polysiloxanes according to the invention obtained after equilibration contain benzenesulfonate or toluenesulfonate anions.

The preparation of polysiloxanes according to the invention which additionally contain units of the formula -Si(R¹)(X)-O- is possible, for example in the case where R¹ = CH₃, by additionally co-using, in the described equilibration reaction, a trisiloxane of the formula

HO-Si(CH₃)₂-O-Si(CH₃)(X)-O-Si(CH₃)₂OH

or of the formula

(CH₃)₃Si-O-Si(CH₃)(X)-O-Si(CH₃)₃.

Syntheses of this type are described in EP-A 578 144.
If an open-chain or cyclic oligo- or polyorganosiloxane is additionally used in the equilibration, then a lengthening of the polysiloxane chain can be achieved as a result. Suitable cyclic oligosiloxanes here are primarily hexamethylcyclotrisiloxane or octamethylcyclotetrasiloxane.

Polyorganosiloxanes according to the invention are not only highly suitable as such for the treatment of textile fiber materials, but also in combination with other textile finishing products. For this purpose, mention may be made primarily of amino-functional polysiloxanes known from the prior art which do not contain units of the formula (A). Polysiloxanes according to the invention are highly compatible with these polysiloxanes.
In addition, it has been found that polyorganosiloxanes which contain a unit (A), but not a unit -Si(R¹)(Z)-O-, which thus are not covered by the present invention, have good compatibility with said amino-functional polyorganosiloxanes which do not contain a unit (A).

The invention is illustrated below by working examples.
The product K 5355 specified in the examples comprises about 25% by weight of dipropylene glycol and about 75% by weight of a polyorganosiloxane which contains, within the polysiloxane chain, both units of the formula

-Si(CH₃)₂-O-

and also units of the formula (A), but no units of the formula

-Si(CH₃)(Z)-O-.

The anions assigned to the cationic units (A) are acetate ions. The product can be obtained from Goldschmidt, Germany.

### Example 1 (in accordance with the invention):

a) Equilibration
   75.3 g of octamethylcyclotetrasiloxane (D4)
   17.2 g of K 5355 (as described above)
   5.3 g of DYNASYLAN 1411 (Brenntag, Germany)
   and 1.4 g of water
      were combined. Then, 0.9 g of 45% strength aqueous KOH was added, the mixture was heated to 120°C (reflux) and held at 120°C for 3 hours, during which water, acetic acid and methanol formed in the reaction were partially distilled off.
      DYNASYLAN 1411 is a silane of the formula 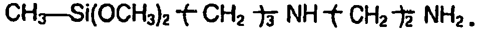 In this equilibration reaction, D4 serves as a chain-extending agent, DYNASYLAN 1411 serves as a radical of the formula (I) given above and in claim 1, and KOH serves as a catalyst. A cloudy pale beige product with a viscosity of about 1000 mPa.s (at 20°C) was obtained.
b) Quatemization and dispersion in water
   A mixture of
   10.1 g of MARLIPAL O 13/80 (ethoxylated branched C₁₃-alcohol)
   0.9 g of tris(2-butoxyethyl)phosphate
   3 g of propylene glycol
   and 66 g of water
   was prepared. The first-named product serves as a dispersant. The phosphate and propylene glycol serve as stabilizers.
   At room temperature, 15 g of the product obtained according to the abovementioned step a) were added to the resulting mixture. With stirring, 3.7 g of methyl p-toluenesulfonate (quaternizing agent) were then added. The mixture was then heated to 60°C and stirred at this temperature for 4 hours. This gave a product which was clear at room temperature (= microemulsion No. 1), to which 0.5 g of Na formate was added to adjust the pH.

### Example 2 (in accordance with the invention)

Example 1 was repeated with the following differences:
In step a) (equilibration), the following amounts were used:
   67.3 g of D4
   25 g of K 5355
   5.1 g of DYNASYLAN 1411
For step b), 15 g of the product obtained in step a) were used. Step b) was likewise carried out as step b) of Example 1.
A clear product (= microemulsion 2) was obtained.

### Example 3 (not in accordance with the invention)

93 g of an unsubstituted polydimethylsiloxane with a viscosity of about 2000 mPa.s at 25°C,
5.2 g of DYNASYLAN 1411
and 1.5 g of water
were mixed together. 0.25 g of 45% strength aqueous KOH was then added, the mixture was heated to 120°C (reflux) and held at this temperature for 3 hours. A grey-colored, cloudy liquid resulted.
Using 15 g of the resulting product, a quatemization was carried out under the same conditions as in step b) of Example 1 with the difference that firstly only 50% of the total amount of methyl p-toluenesulfonate were added, then stirring was carried out for 1 hour at 60°C, then the second 50% of the ester were added and then the mixture was stirred for a further 3 hours at 60°C.
A clear emulsion (= comparison emulsion) was obtained.

### Example 4 (in accordance with the invention)

The TEGOPREN 6924 (Goldschmidt, Germany) used in this example is a polydimethylsiloxane which has a unit of the formula Y(CH₃)₂Si- on each of the two chain ends, where Y is a radical of the formula (II) given above and in claim 1 where t = 0 and b = 1.
5.00 g of TEGOPREN 6924
0.50 g of H₂O
were initially introduced, heated to 125°C, and acetic acid was distilled off.
Then,
75.27 g of octamethylcyclotetrasiloxane
5.25 g of DYNASYLAN 1411 and
1.42 g of H₂O
were added and stirred. Then, 0.65 g of aqueous KOH was added, heated to 120°C (reflux) and held at 120°C for 5 hours, during which water and methanol which forms in the reaction were partially distilled off.

Then, the resulting product was dispersed and quaternized using methyl toluenesulfonate (quaternization of the nitrogen atoms present in the radicals Z which originate from DYNASYLAN), as given in Example 1. This gave a clear, stable dispersion.

1 sample of each of the microemulsions 1 and 2, the dispersion from Example 4 and the comparison emulsion was used to treat a knit consisting of 100% of cotton. Application of the emulsions was by means of padding, and then the samples were dried for 10 minutes at 110°C. The sample treated with microemulsion 1 exhibited a very marked inner softness (manual assessment via the feel), microemulsion 2 and dispersion according to Example 4 led to an inner softness which had a tendency to be somewhat poorer, whereas comparison emulsion 3 exhibited a markedly poorer inner softness.

## Claims

1. A polyorganosiloxane which has, within the polysiloxane chain, one or more of each of the following structural units
-Si(R¹)₂-O-,
and
-Si(R¹)(Z)-O-,
where the structural units may be distributed arbitrarily over the polysiloxane chain, where the polyorganosiloxane is an open-chain polyorganosiloxane, which additionally contains, within the polysiloxane chain, units of the formula (A) 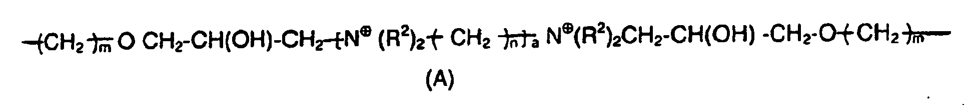 and which contains units of the formula
(R¹)(Y)₂Si-O-
as end-groups,
in which one of the radicals Z present is a radical of the formula (I) and all of the other radicals Z, independently of one another, are R¹ or a radical of the formula (I) 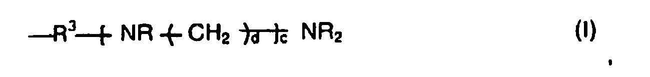 where, in one or more of the radicals of the formula (I), one or more of the nitrogen atoms present may be in quaternized form,
where all of the radicals R¹, independently of one another, are -CH₃ or -CH₂CH₃,
where all of the radicals R, independently of one another, are hydrogen or a linear or branched alkyl radical having 1 to 16 carbon atoms,
all of the radicals R², independently of one another, are an alkyl radical having 1 to 18 carbon atoms,
all of the radicals R³, independently of one another, are a linear or branched alkylene radical having 2 to 6 carbon atoms,
a is 1 or 2,
m is a number from 1 to 8, preferably 3,
n is a number from 2 to 8, preferably 6,
c is 0, 1 or 2,
d is a number from 2 to 6,
where all of the radicals Y present, independently of one another, are an alkyl radical having 1 to 12 carbon atoms or are a radical of the formula (I) or a radical of the formula (I) in which one or more of the nitrogen atoms are in quaternized form, or where all of the radicals Y, independently of one another, are OH or OR², or where all of the radicals Y, independently of one another, are a radical of the formula (II) 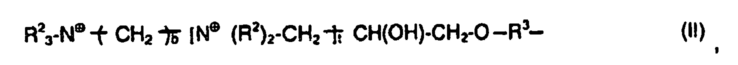 where t is 0 or 1 and b has the value 1 when t = 0, and b is a number from 2 to 6 when t = 1,
and where the polyorganosiloxane contains anions appertaining to the quaternary nitrogen atoms and these appertaining anions are chosen from benzenesulfonate anions and toluenesulfonate anions.

2. The polyorganosiloxane as claimed in claim 1, **characterized in that** it contains at least one radical Z of the formula 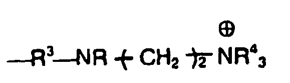 or of the formula 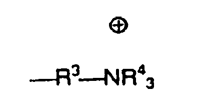 or of the formula 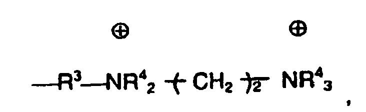 in which all of the radicals R⁴, independently of one another, are an alkyl radical having 1 to 8 carbon atoms, preferably CH₃.

3. An aqueous solution or dispersion which comprises a polyorganosiloxane as claimed in claim 1 or 2.

4. The use of a solution or dispersion as claimed in claim 3 for the treatment of fiber materials.

## Patentansprüche

1. Polyorganosiloxan, welches innerhalb der Polysiloxankette je eine oder mehrere der folgenden Struktureinheiten
-Si(R¹)₂-O-,
und
-Si(R¹)(Z)-O-
aufweist,
wobei diese Struktureinheiten beliebig über die Polysiloxankette verteilt sein können, wobei das Polyorganosiloxan ein offenkettiges Polyorganosiloxan ist, das zusätzlich innerhalb der Polysiloxankette Einheiten der Formel (A) 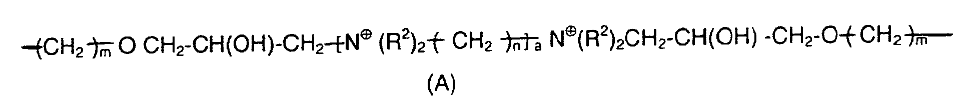 enthält und das als Endgruppen Einheiten der Formel
(R¹)(Y)₂Si-O-
enthält,
worin einer der anwesenden Reste Z für einen Rest der Formel (I) steht und alle übrigen Reste Z unabhängig voneinander für R¹ oder für einen Rest der Formel (I) 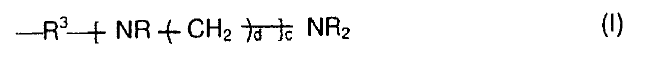 stehen,
wobei in einem oder mehreren der Reste der Formel (I) eines oder mehrere der anwesenden Stickstoffatome in quaternisierter Form vorliegen können,
wobei alle Reste R¹ unabhängig voneinander für -CH₃ oder für -CH₂CH₃ stehen,
wobei alle Reste R unabhängig voneinander für Wasserstoff oder einen linearen oder verzweigten Alkylrest mit 1 bis 16 Kohlenstoffatomen stehen,
alle Reste R² unabhängig voneinander für einen Alkylrest mit 1 bis 18 Kohlenstoffatomen stehen,
alle Reste R³ unabhängig voneinander für einen linearen oder verzweigten Alkylenrest mit 2 bis 6 Kohlenstoffatomen stehen,
a für 1 oder 2 steht,
m für eine Zahl von 1 bis 8, vorzugsweise für 3, steht,
n für eine Zahl von 2 bis 8, vorzugsweise für 6, steht,
c für 0, 1 oder 2 steht,
d für eine Zahl von 2 bis 6 steht,
wobei alle anwesenden Reste Y unabhängig voneinander für einen Alkylrest mit 1 bis 12 Kohlenstoffatomen oder für einen Rest der Formel (I) stehen oder für einen Rest der Formel (I), in dem eines oder mehrere der Stickstoffatome in quaternisierter Form vorliegen, oder wobei alle Reste Y unabhängig voneinander für OH oder OR² stehen, oder wobei alle Reste Y unabhängig voneinander für einen Rest der Formel (II) 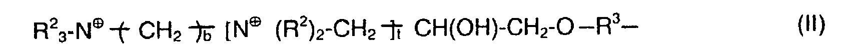 stehen,
wobei t 0 oder 1 ist und b den Wert 1 besitzt, wenn t = 0 und b für eine Zahl von 2 bis 6 steht, wenn t = 1,
und wobei das Polyorganosiloxan den quaternären Stickstoffatomen zugehörige Anionen enthält und diese zugehörigen Anionen ausgewählt sind aus Benzolsulfonatanionen und Toluolsulfonatanionen.

2. Polyorganosiloxan nach Anspruch 1, **dadurch gekennzeichnet, daß** es mindestens einen Rest Z der Formel 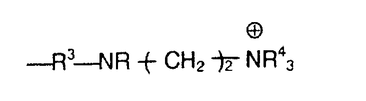 oder der Formel 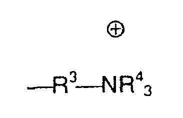 oder der Formel 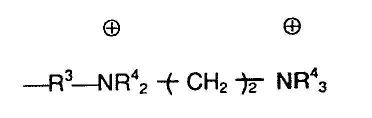 enthält, worin alle Reste R⁴ unabhängig voneinander für einen Alkylrest mit 1 bis 8 Kohlenstoffatomen, vorzugsweise für CH₃, stehen.

3. Wäßrige Lösung oder Dispersion, welche ein Polyorganosiloxan gemäß Anspruch 1 oder 2 enthält.

4. Verwendung einer Lösung oder Dispersion gemäß Anspruch 3 zur Behandlung von Fasermaterialien.

## Revendications

1. Polyorganosiloxane qui a, dans la chaîne polysiloxane, une ou plusieurs de chacune des unités structurales suivantes :
-Si(R¹)₂-O- ;
et
-Si(R¹) (Z)-O-,
où les unités structurales peuvent être distribuées arbitrairement sur la chaîne polysiloxane, où le polyorganosiloxane est un polyorganosiloxane à chaîne ouverte, qui de plus contient, dans la chaîne polysiloxane, des unités de la formule (A) : 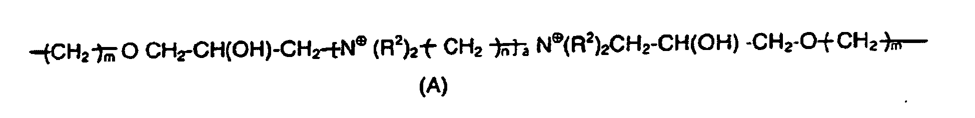 et qui contient des unités de la formule :
(R¹) (Y)₂Si-O-
en tant que groupes terminaux,
dans lesquelles l'un des radicaux Z présents est un radical de la formule (I) et tous les autres radicaux Z, indépendamment les uns des autres, sont R¹ ou un radical de la formule (I) : 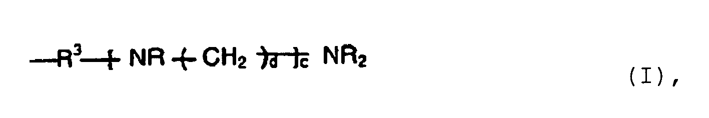 où, dans un ou plusieurs des radicaux de la formule (I), un ou plusieurs des atomes d'azote présents peuvent être sous forme quaternisée,
où tous les radicaux R¹, indépendamment les uns des autres, sont -CH₃ ou -CH₂CH₃,
où tous les radicaux R, indépendamment les uns des autres, sont hydrogène ou un radical alkyle linéaire ou ramifié ayant 1 à 16 atomes de carbone ;
tous les radicaux R², indépendamment les uns des autres, sont un radical alkyle ayant 1 à 18 atomes de carbone,
tous les radicaux R³, indépendamment les uns des autres, sont un radical alkylène linéaire ou ramifié ayant 2 à 6 atomes de carbone,
a est 1 ou 2,
m est un nombre de 1 à 8, de préférence 3,
n est un nombre de 2 à 8, de préférence 6,
c est 0, 1 ou 2,
d est un nombre de 2 à 6,
où tous les radicaux Y présents, indépendamment les uns des autres, sont un radical alkyle ayant 1 à 12 atomes de carbone ou sont un radical de la formule (I) ou un radical de la formule (I) dans laquelle un ou plusieurs des atomes d'azote sont sous forme quaternisée, ou où tous les radicaux Y, indépendamment les uns des autres, sont OH ou OR², ou où tous les radicaux Y, indépendamment les uns des autres, sont un radical de la formule (II) : 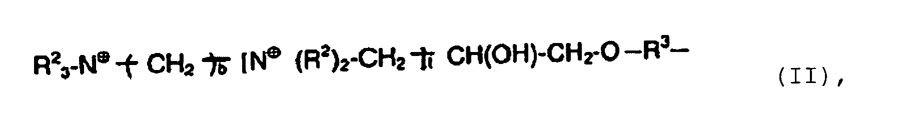 où t est 0 ou 1 et b a la valeur 1 lorsque t=0, et b est un nombre de 2 à 6 lorsque t=1,
et où le polyorganosiloxane contient des anions de rattachement aux atomes d'azote quaternaire et ces anions de rattachement sont choisis parmi les anions benzènesulfonate et les anions toluènesulfonate.

2. Polyorganosiloxane selon la revendication 1, **caractérisé en ce qu'**il contient au moins un radical Z de la formule : 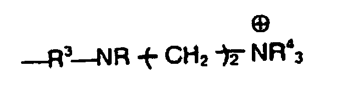 ou de la formule : 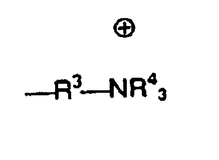 ou de la formule : 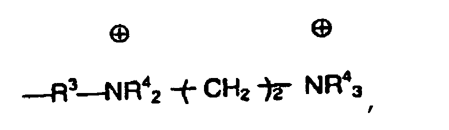 dans laquelle tous les radicaux R⁴, indépendamment les uns des autres, sont un radical alkyle ayant 1 à 8 atomes de carbone, de préférence CH₃.

3. Solution ou dispersion aqueuse qui comprend un polyorganosiloxane selon l'une des revendications 1 ou 2.

4. Utilisation d'une solution ou d'une dispersion selon la revendication 3 pour le traitement de matières fibreuses.
